# EUROPÄISCHE PATENTANMELDUNG

(11) **EP 1 327 872 A2**
(43) Veröffentlichungstag der Anmeldung: **16.07.2003**
(21) Anmeldenummer: 02090421.5
(22) Anmeldetag: 20.12.2002
(51) Int. Cl.: G01M 17/00

(54) **Vorrichtung zur Bestimmung des Reifeninnendruckes**

(30) Priorität: 10.01.2002 DE 20200489 U
(71) Anmelder: Velomat Messelektronik GmbH, 01917 Kamenz (DE)
(72) Erfinder: Drechsel, Matthias, Dr., 01920 Elstra (DE); Wunderwald, Reinald, 01920 Ossling (DE)
(74) Vertreter: Maikowski, Michael, Dipl.-Ing. Dr.

(57) **Zusammenfassung**

Die Erfindung bezieht sich auf eine Vorrichtung zur Bestimmung des Reifeninnendruckes, insbesondere von Fahrzeugreifen, mit einer Messeinheit, einer Auswerteelektronik und einer optisch-akustischen Anzeigeeinheit. Erfindungsgemäß ist vorgesehen, dass die Messeinheit je Fahrzeugspur angeordnet ist und elektromechanische Mittel mit einem nachgeordneten Signalwandler aufweist.

## Beschreibung

Die Erfindung betrifft eine Vorrichtung zur Bestimmung des Reifeninnendruckes, insbesondere von Fahrzeugreifen, nach dem Oberbegriff des Anspruchs 1.

Der Reifeninnendruck ist für das Fahrzeug ein sicherheitsrelevanter und auf die Laufleistung der Reifen einwirkender physikalisch-technischer Parameter. Der Reifeninnendruck beeinflusst sowohl den Verschleiss der Reifen als auch indirekt den Kraftstoffverbrauch eines Kraftfahrzeugs. Der Zustand der Fahrzeugreifen, der u.a. durch den Reifeninnendruck wesentlich geprägt wird, ist für die Sicherheit im Fahrzeugverkehr von besonderer Bedeutung. Daher ist die Prüfung des Reifeninnendrucks fester Bestandteil von turnusmässigen Kraftfahrzeug-Kundendienstleistungen. Die Prüfung des Reifeninnendrucks ist auch vor Achsvermessungen, Fahrwerktests und Spurprüfungen erforderlich.

Da sich der Verschleiss von Fahrzeugreifen über die Nutzungsdauer sowie durch Sonderaufbauten an Fahrzeugen ständig verändert, ist für den Fahrzeugnutzer der erforderliche, aktuelle und optimale Reifeninnendruck schwer zu bestimmen.

Die gegenwärtig übliche Prüfung des Reifeninnendrucks an Fahrzeugen wird manuell meistens vom Kraftfahrzeugführer durch Prüfmanometer mit Kompressor bzw. Gasfülleinrichtung direkt am Rad durch mehrere aufeinander folgende Prüf- und Druckausgleichshandlungen vorgenommen. Somit ist das Gewinnen der Gewissheit, ob optimale Druckdaten vorliegen, für den Fahrzeugnutzer zwar an jeder Tankstelle oder in jeder Werkstatt möglich, aber umständlich zu realisieren.

Durch die Verschmutzung von Händen und/oder Kleidung wird die manuelle Prüfung des Reifeninnendrucks von den meisten Fahrzeugführern oft ungern vorgenommen.

Es sind Vorrichtungen zur Bestimmung des Reifeninnendruckes mittels einer Messeinheit, einer Auswerteelektronik und einer Anzeigeeinheit bekannt.

In der deutschen Übersetzung 694 04 115 T2 der europäischen Patentschrift 0 656 269 B1 ist ein System zur Druckbestimmung eines Fahrzeugreifens beschrieben. Dabei wird ein räumlich zweidimensionales Feld von Lastsensoren verwendet, um ein Muster der Kraftverteilung zu erhalten. Die Bestimmung des Reifeninnendrucks erfolgt durch ein neuronales Netzwerk.

Nachteilig an diesem System ist, dass die Sensoren über eine ausreichend große Fläche angeordnet werden müssen, damit sie mit dem gesamten Abdruck eines Fahrzeugreifens in Kontakt kommen. Weiterer Nachteil dieses Systems ist, dass piezoelektrische Elemente und neurale Netzwerke verwendet werden, wodurch die Bestimmung des Reifeninnendrucks teuer und aufwendig ist.

Aus der europäischen Patentanmeldung 0 892 259 A1 ist weiterhin eine Anordnung zur Bestimmung des Reifeninnendrucks bekannt, bei der der Reifeninnendruck mittels einer Messschiene während der Fahrt erfasst wird. Dabei wird zunächst der Kontakt mit einer vorgeschaltenen Kontaktschiene vorausgesetzt, um über die Fahrzeuggeschwindigkeit und im Zusammenwirken mit einer nachgeordneten Messschiene den Reifeninnendruck ermitteln zu können.

Der Erfindung liegt die Aufgabe zugrunde, eine Vorrichtung zur Bestimmung des Reifeninnendruckes zur Verfügung zu stellen, die sich gegenüber bekannten Vorrichtungen durch einen einfachen Aufbau auszeichnet und kostengünstig ist.

Diese Aufgabe wird erfindungsgemäss durch eine Vorrichtung mit den Merkmalen des Anspruchs 1 gelöst, dadurch dass eine Messeinheit je Fahrzeugspur angeordnet ist und elektromechanische Mittel mit einem nachgeordneten Signalwandler aufweist.

Die Bestimmung des Reifeninnendrucks erfolgt dabei weitgehend über die Berechnung der Reifenaufstandsfläche.

Die erfindungsgemässe Lösung schafft eine Vorrichtung, die sich gegenüber bekannten Vorrichtungen zur Bestimmung des Reifeninnendrucks durch einen einfachen Aufbau auszeichnet und kostengünstig ist.

Die Vorrichtung besteht aus einer Messplatte je Fahrzeugspur, welche in den Boden der Fahrbahn zum Zwecke des spurgerechten Überrollens durch das betreffende Fahrzeug eingelassen wird. Die Messplatte setzt sich aus einem Trägerkörper und einem Messkörper zusammen, wobei der Messkörper eine variable Anzahl Messhebel mit einem aufgebrachten, kraftsensitiven Signalwandler und einem Messverstärker je Signalwandler aufweist.

Als Signalwandler werden vorzugsweise Dehnungsmessstreifen (DMS) eingesetzt. Die Dehnungsmessstreifen stellen einen linearen Teil, beispielsweise eine lineare Zeile dar, der einfach herzustellen ist und an beliebigen Stellen auf dem Betriebsgelände einer Tankstelle, Werkstatt, Prüfstand oder ähnliche Einrichtungen leicht anzubringen ist. Aufgrund des weit verbreiteten Einsatzes von Dehnungsmessstreifen in den letzten Jahrzehnten besteht eine grosse Auswahl an verschiedenen Arten von DMS, die sich durch kleine Abmessungen und hohe Widerstandsfähigkeit auszeichnen. Aufgrund der hergestellten hohen Stückzahlen sind die DMS auch besonders kostengünstig.

Der Einsatz weiterer geeigneten Signalwandler-Vorrichtungen wird jedoch durch die erfindungsgemässe Vorrichtung nicht ausgeschlossen.

Die erfindungsgemässe Vorrichtung kann vorzugsweise in den Boden beliebiger Tankstellen, Werkstätten oder vergleichbarer Einrichtungen eingebracht werden. Bereits bei der Einfahrt eines Fahrzeuges in die Werkstatt oder Tankstelle erhält der Fahrzeugführer nach dem Überfahren der in den Boden eingelassenen Vorrichtung Informationen über den aktuellen Zustand der Reifeninnendrücke, die beispielsweise durch einfachste optische Ampelsignale "Rot - Gelb - Grün" angezeigt werden.

Durch das einfache Einbringen der Messplatte mit den Dehnungsmessstreifen in den Fahrboden wird eine flexible Positionierung der Messvorrichtung an beliebigen Stellen auf dem Betriebsgelände einer Tankstelle oder einer Werkstatt ermöglicht. Auch die kostengünstige Herstellung der Dehnungsmessstreifen im Vergleich beispielsweise mit der Herstellung von Piezoelementen ist ein weiterer ausschlaggebender Vorteil für die Anwendung der erfindungsgemässe Lösung.

Vorteilhaft ist, daß zur Überprüfung des Reifeninnendrucks kein Aussteigen mehr aus dem Fahrzeug erforderlich ist. Die übliche manuelle Prüfung, nach welcher der Fahrzeugführer 90 von 100 Male zur Erkenntnis kommt, dass der Reifeninnendruck den vorgegebenen Werten entspricht, entfällt.

Weitere Vorteile der Erfindung bestehen darin, dass durch die Messvorrichtung die kontinuierliche und einfache Kontrolle und somit die Überwachung des Reifeninnendruckes beispielsweise bei jedem Tankvorgang ermöglicht wird.

Anhand der in den Zeichnungen dargestellten Ausführungsbeispiele soll der der Erfindung zugrundeliegende Gedanke näher erläutert werden. Es zeigen:
- Figur 1: Reifen bei Unter-, Normal- und Überdruck
- Figur 2: Kraftverteilung bei Unter-, Normal- und Überdruck
- Figur 3: eine Vorderansicht der Messvorrichtung
- Figur 4: eine Seitenansicht der Messvorrichtung
- Figur 5: eine Draufsicht von Fahrzeug und Messvorrichtung
- Figur 6: ein Ablaufdiagramm des Messvorgangs

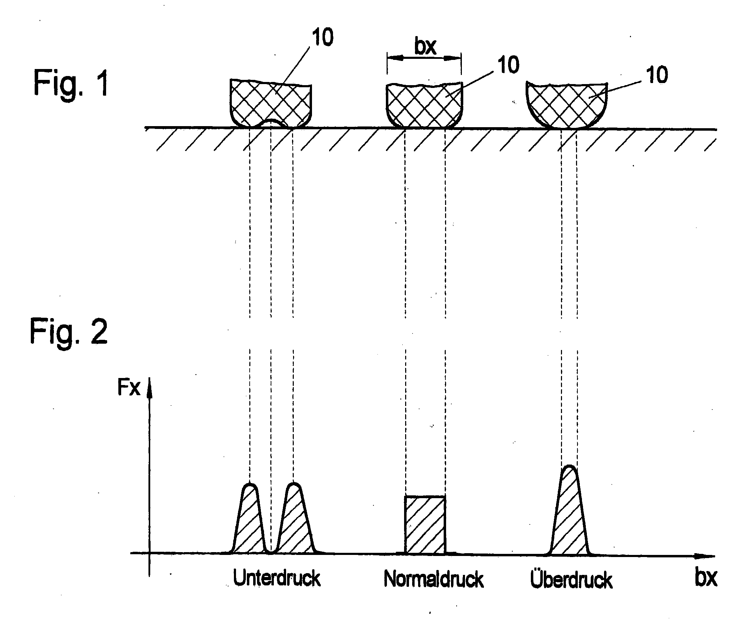

Figur 1 zeigt einen Reifen 10 eines nicht dargestellten Fahrzeugs bei Unter-, Normal- und Überdruck. In Figur 2 ist die entsprechende Kraftverteilung in diesen drei Fällen dargestellt, wobei im Fall eines Reifens mit Unterdruck die Reifenaufstandsfläche viel größer ist als im Fall eines Reifens mit Normaldruck. Die Kraftverteilung ist unterbrochen in der Mitte des Reifens aufgrund des fehlenden Kontakts des Reifens mit der Fahrbahn. Im Fall eines Reifens mit Überdruck ist die Reifenaufstandsfläche kleiner als im Normalfall. Im Normalfall zeichnet sich dagegen der Reifen durch eine gleichmässige Kraftverteilung aus.

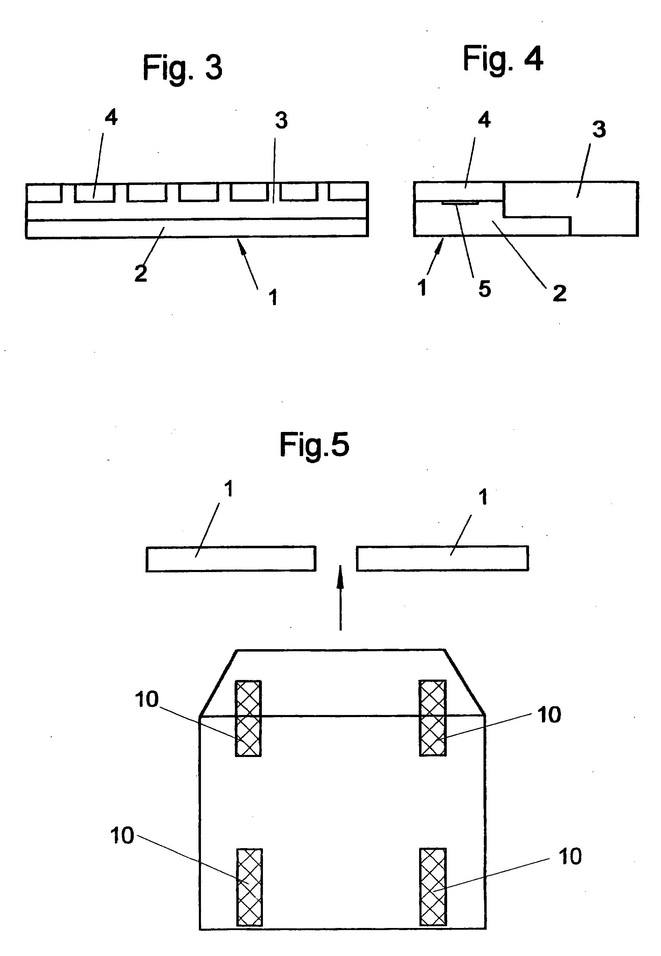

Die in Figur 3 und 4 in Vorder- und Seitenansicht dargestellte Vorrichtung besteht aus einer Messplatte 1, die sich aus einem Trägerkörper 2 und einem Messkörper 3 zusammensetzt. Der Messkörper 3 enthält eine variable Anzahl Messhebel 4 mit aufgebrachten, kraftsensitiven Signalwandlern 5 und einem, nicht dargestellten, nachgeschalteten Messverstärker, wobei als Signalwandler vorzugsweise Dehnungsmessstreifen eingesetzt werden.

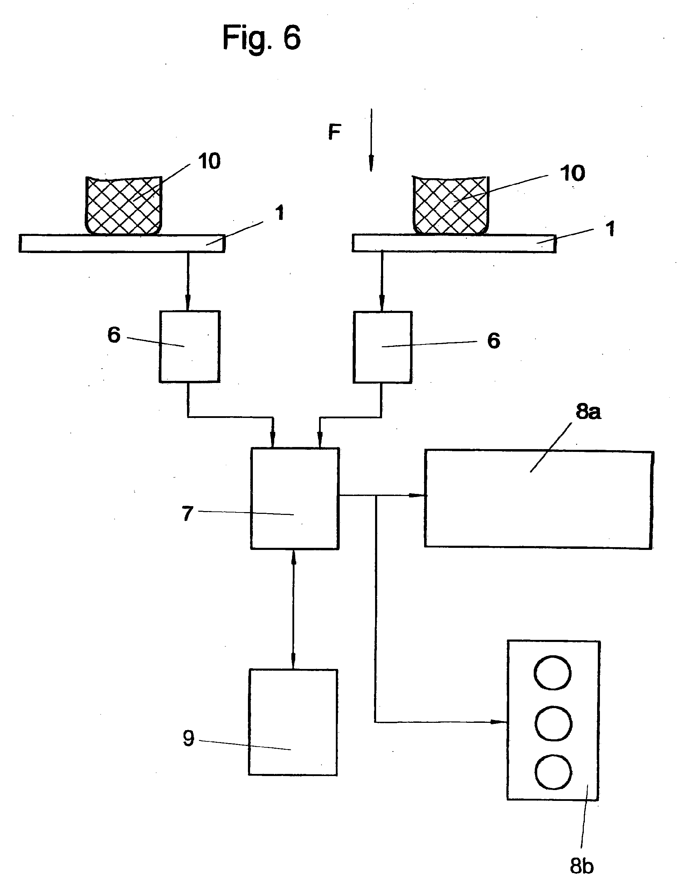

Beim Überrollen des Fahrzeuges über die Messplatte 1 der jeweiligen Spur, wie im Ablaufdiagramm in Figur 6 dargestellt, werden die Messhebel 3 unter dem Einfluss der Radstandkraft F gering verformt. Die Signalwandler 5 wandeln diese Veränderung der physikalischen Grösse Kraft in ein elektrisches Signal und führen es weiter wie in Figur 6 dargestellt. Die nachgeordnete Verstärkerelektronik 6 verstärkt das Signal und stellt es dem Messcomputer 7 bereit.

In einem Hostcomputer 9 befinden sich Formeln, technische Daten der Reifentypen und empirische Werte von physikalischen Zusammenhängen und Gesetzmässigkeiten, welche der Berechnung der Reifenaufstandsfläche zugrunde liegen.

Durch die im Hostcomputer 9 hinterlegte Formeln wird die Reifenaufstandsfläche über die Reifenbreite und Abrollfläche berechnet und grafisch abgeleitet, wobei die im Hostcomputer 9 hinterlegten technischen Daten über verschiedene Profilarten bei der Berechnung der Reifenaufstandsfläche berücksichtigt werden. Aus der Berechnung und grafischen Ableitung der Reifenaufstandsfläche können zuverlässige Rückschlüsse auf den aktuellen Reifeninnedruck abgeleitet werden. Die gewonnenen Informationen über den Reifeninnendruckzustand stellen keine Ergebnisse einer Präzisionsmessung dar, liefern jedoch dem Fahrzeugführer ausreichende Hinweise über einen Über-, Unter- oder Normaldruck in den Fahrzeugreifen.

Die hinterlegten technischen Daten lasen sich bei Bedarf einfach aktualisieren, da nur eine gewisse Zahl Reifenprofile existiert. Diese bekannten Reifenprofile sind für Reifen verschiedener Hersteller zutreffend. Daher lassen sich aus diesen Daten Reifentypenfamilien bilden und können beispielsweise in einer Datenbank erfasst werden.

Empirische Daten aus durchgeführten Versuchen werden ebenfalls im Hostcomputer 9 zur Verbesserung der Ergebnisse zur Verfügung gestellt.

Aus der Berechnung und grafischen Ableitung der Reifenaufstandsfläche über die Reifenbreite und die Abrollfläche des Reifens kann man aus den daraus gewonnenen Informationen direkt präzise und zuverlässige Rückschlüsse auf den aktuellen Reifeninnendruck ableiten.

Aus den gleichen Daten können ausserdem Informationen über die Achslast des Fahrzeuges hergeleitet werden und somit direkt Empfehlungen zur individuellen Anpassung des Reifeninnendruckes in Bezug auf Fahrzeuggewicht, Zuladung oder Nutzungsgewohnheiten gewonnen werden.

Nach der Auswertung und mathematischen Bearbeitung der durch die einzelnen Sensoren der jeweiligen Messplatte erzeugten Signale werden die daraus gewonnenen Informationen zur Anzeigeeinheit geleitet.

Die Anzeige des Reifeninnendrucks wird durch eine optischakustische Anzeigeeinheit gewährleistet, die beispielsweise als eine Ampel 8b und/oder eine Anzeigetafel 8a oder ähnliche Vorrichtung ausgebildet werden kann. Die Anzeige kann auch in Papierform als gedruckter Bericht erfolgen.

Die erfindungsgemässe Vorrichtung ermöglicht weitgehend die zuverlässige Bestimmung und Anzeige des aktuellen Reifeninnendruckes auf kostengünstige und einfache Art.

## Patentansprüche

1. Vorrichtung zur Bestimmung des Reifeninnendruckes, insbesondere von Fahrzeugreifen, mit einer Messeinheit, einer Auswerteelektronik und einer optisch-akustischen Anzeigeeinheit, **dadurch gekennzeichnet, dass** die Messeinheit je Fahrzeugspur angeordnet ist und elektromechanische Mittel mit einem nachgeordneten Signalwandler aufweist.

2. Vorrichtung nach Anspruch 1 **dadurch gekennzeichnet, dass** die Messeinheit aus einem Trägerkörper und einem Messkörper besteht.

3. Vorrichtung nach Anspruch 1, **dadurch gekennzeichnet, dass** der Reifeninnendruck über die Reifenaufstandsfläche bestimmt wird.

4. Vorrichtung nach Anspruch 1, **dadurch gekennzeichnet, dass** mathematische Formel, technische Daten von Reifentypen und empirische Werte von physikalischen Gesetzmäßigkeiten, welche der Berechnung der Reifenaufstandsfläche über die Reifenbreite und die Abrollfläche des Reifens zugrunde liegen, in einem Computer verfügbar sind.

5. Vorrichtung nach Anspruch 1 **dadurch gekennzeichnet, dass** die Messeinheit in einem Fahrbahnboden eingebracht ist.

6. Vorrichtung nach Anspruch 2 **dadurch gekennzeichnet, dass** die elektromechanische Mittel der Messeinheit als Messhebel ausgebildet sind.

7. Vorrichtung nach einem der vorhergehenden Ansprüche **dadurch gekennzeichnet, dass** die Messhebel beim Überrollen des Fahrzeugs unter Einfluß der Radstandkraft verformt werden.

8. Vorrichtung nach einem der vorhergehenden Ansprüche **dadurch gekennzeichnet, dass** als Signalwandler Dehnungsmessstreifen verwendet werden.

9. Vorrichtung nach einem der vorhergehenden Ansprüche, **dadurch gekennzeichnet, dass** das elektrische Signal mittels einer Verstärkerelektronik verstärkt und einer Auswerteelektronik bereit gestellt wird.

10. Vorrichtung nach einem der vorhergehenden Ansprüche **dadurch gekennzeichnet, dass** als Auswerteelektronik ein Messcomputer dient.

11. Vorrichtung nach einem der vorhergehenden Ansprüche, **dadurch gekennzeichnet, dass** Informationen über die Achslast des Fahrzeuges gewonnen werden.

12. Vorrichtung nach einem der vorhergehenden Ansprüche, **dadurch gekennzeichnet, dass** der aktuelle Reifeninnendruck mittels einer Anzeigeeinheit angezeigt wird.
